# FASCICULE DE BREVET EUROPEEN

(11) **EP 4 007 879 B1**
(45) Date de publication et mention de la délivrance du brevet: **07.06.2023**
(21) Numéro de dépôt: 20743170.1
(22) Date de dépôt: 27.07.2020
(51) Int. Cl.: F25D 3/06, B61D 27/00, F25D 17/06

(54) **UNITÉ MOBILE DE REFROIDISSEMENT**
MOBILKÜHLGERÄT
MOBILE COOLING UNIT

(30) Priorité: 02.08.2019 FR 1908914
(43) Date de publication de la demande: 08.06.2022
(73) Titulaire: Reboul, Claude, 75016 Paris (FR)
(72) Inventeur: Reboul, Claude, 75016 Paris (FR)
(74) Mandataire: Lavialle, Bruno François Stéphane
(86) Numéro de dépôt international: PCT/EP2020/071157
(87) Numéro de publication internationale: WO 2021/023553

(56) Documents cités:
- EP-A2- 2 386 811
- CN-A- 107 980 891
- JP-A- 2003 254 650
- US-A- 2 115 344
- US-A1- 2015 143 823

## Description

### ARRIERE PLAN DE L'INVENTION

L'invention concerne une unité mobile de refroidissement qui peut par exemple être placée dans un espace de stockage non réfrigéré pour maintenir des marchandises ou des denrées au froid, ou tout au moins ralentir leur réchauffement, tel que par exemple la soute d'un camion isolé mais non réfrigéré.

On connaît des unités mobiles de refroidissement comportant un compresseur associé à un échangeur à placer en dehors de l'espace à refroidir, tel que, par exemple, cela est décrit dans le brevet US 2 115 344. Le compresseur, d'une certaine puissance, sert à compresser un fluide à changement de phase. Cependant, ces unités ne sont pas adaptées à être facilement chargées et placées dans la soute d'un camion. Le placement de l'échangeur est problématique, puisqu'il faut prévoir le passage de tuyaux au travers de la paroi de la soute pour disposer l'échangeur à l'extérieur. De plus, le compresseur doit être relié à une source de puissance électrique du camion de puissance suffisante pour entraîner le compresseur.

D'autres unités mobiles de refroidissement sont connues des documents US 2 115 344 A, EP 2 386 811 A2, CN 107 980 891 A, US 2015/143823 A1, et enfin de JP 2003 254650 A considéré comme l'état de la technique le plus proche.

### OBJET DE L'INVENTION

L'invention a pour objet de proposer une unité de stockage de froid simple à mettre en oeuvre et peu coûteuse.

### RESUME DE L'INVENTION

En vue de la réalisation de ce but, on propose une unité de refroidissement comportant :
- un chariot comportant un fond ajouré et des parois ajourées définissant un espace de stockage, le chariot étant muni d'éléments roulants pour son déplacement ;
- des capsules contenant un matériau à changement de phase qui sont reçues dans l'espace de stockage du chariot ;
- un élément d'occultation des parois pour occulter les parois du chariot, pouvant être escamoté pour laisser les parois découvertes ;
- un groupe de ventilo-convection rapporté sur le chariot pour aspirer de l'air de l'extérieur, le faire pénétrer par une extrémité dans l'espace de stockage pour le faire circuler autour des capsules avant de le rejeter vers l'extérieur par une autre extrémité de l'espace de stockage.

Le chariot rempli de capsules est tout d'abord placé dans un entrepôt réfrigéré (typiquement un entrepôt à -20 degrés Celsius) pour provoquer le changement de phase du matériau contenu dans les capsules, alors que l'élément d'occultation est escamoté. Le changement de phase est considérablement facilité par la disposition du matériau à changement de phase dans des capsules et par les jours des parois ajourées du chariot, ce qui augmente considérablement la surface d'échange avec l'air froid de l'entrepôt réfrigéré.

Puis quand l'unité de refroidissement doit être utilisée lors du transport des denrées ou marchandises, on la place dans la soute du camion en plaçant l'élément d'occultation sur les parois du chariot pour les occulter, et en activant le groupe de ventilo-convection, par exemple en le branchant à une source d'énergie électrique du camion. L'élément d'occultation ralentit le réchauffement du matériau à changement de phase dans les capsules en isolant ces dernières de l'extérieur, et canalise l'air aspiré par le groupe de ventilo-convection en le forçant à passer entre l'ensemble des capsules. L'unité mobile de refroidissement délivre alors un flux d'air rafraichi au contact des capsules, propre à maintenir dans la soute du camion une température adéquate pour maintenir les marchandises ou denrées au frais le temps de la livraison.

L'unité mobile de refroidissement selon l'invention est très simple et ne requiert qu'une puissance électrique limitée à l'activation d'un ventilateur. Elle peut être fabriquée en utilisant un chariot standard type « roll » en fil métallique.

### BREVE DESCRIPTION DES DESSINS

L'invention sera mieux comprise à la lumière de la description détaillée qui suit d'un mode particulier de réalisation de l'invention en référence aux figures des dessins annexés parmi lesquelles :
[Fig. 1] la figure 1 est une vue en perspective éclatée d'une unité mobile de refroidissement selon une premier mode particulier de réalisation de l'invention ;
[Fig. 2] la figure 2 est une vue en perspective de l'unité mobile de refroidissement de la figure 1, débarrassée de l'élément d'occultation, alors qu'elle est placée dans un entrepôt réfrigéré pour provoquer le changement de phase du matériau contenu dans les capsules ;
[Fig. 3] la figure 3 est une vue en perspective de l'unité mobile de refroidissement de la figure 1, alors qu'elle est placée dans une zone à refroidir, par exemple la soute d'un camion.
[Fig. 4] la figure 4 est une vue en perspective d'une unité mobile de refroidissement selon un deuxième mode particulier de réalisation dont l'élément d'occultation comporte des rideaux roulants, l'un des rideaux ayant été dessiné relevé.

### DESCRIPTION DETAILLEE D'UN MODE PARTICULIER DE REALISATION DE L'INVENTION

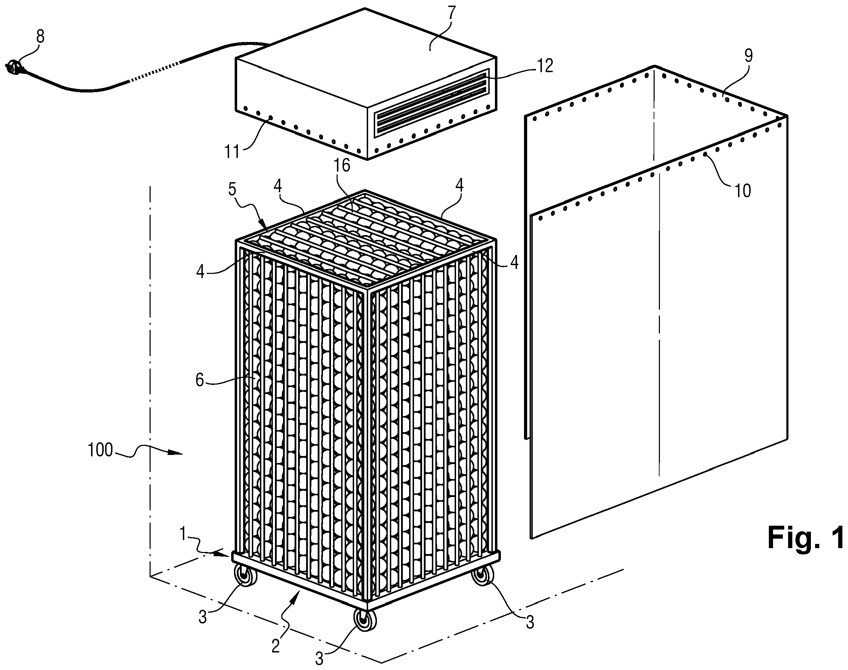

En référence à la figure 1 et selon un premier mode particulier de réalisation de l'invention, l'unité de refroidissement 100 comporte un chariot 1, ici réalisé en fil métallique, comportant un fond 2 portant des éléments roulants sous la forme ici de roulettes 3, et des parois 4 délimitant avec le fond un espace de stockage 5 refermé en partie supérieure par une grille 16 fixée sur l'extrémité supérieure du chariot 1. Le fond 2, les parois 4 et la grille 16 sont largement ajourés du fait de leur fabrication en fil métallique. L'espace de stockage 5 est ici rempli de capsules 6 (seule l'une des capsules a été référencée pour plus de clarté) contenant un matériau à changement de phase liquide à température ambiante mais susceptible de se solidifier à des températures régnant habituellement dans des entrepôts réfrigérés (typiquement -20 degrés Celsius). L'utilisation de capsules 6 facilite la manutention de l'unité mobile de refroidissement selon l'invention et évite toute perte de matériau lors du déplacement du chariot.

L'unité mobile de refroidissement 100 de l'invention comporte en outre un groupe de ventilo-convection 7 qui est ici fixé à la grille 16 au-dessus de l'espace de stockage 5. Le groupe de ventilo-convection 7 aspire de l'air par une ouverture 12 pour l'envoyer à travers la grille 16 dans l'espace de stockage 5 et le forcer à passer entre les capsules 6 pour être éjecté vers l'extérieur par le fond 2 du chariot 1. Ici, le groupe de ventilo-convection 7 comporte une prise électrique 8 pour son branchement à une source d'énergie.

Enfin, l'unité mobile de refroidissement 100 comporte une bâche 9 destinée à être rapportée de façon amovible sur les parois 4 pour les occulter entièrement et isoler thermiquement les capsules 6. A cet effet, la bâche 9 comporte des oeillets 10 destinés à être rapportés sur des crochets 11 à la base du groupe de ventilo-convection 7 (seul un oeillet et un crochet ont été référencés pour plus de clarté). Ici, la bâche 9 est dimensionnée pour occulter intégralement les parois 4, avec un recouvrement bord à bord pour rendre les parois 4 entièrement étanches à l'air.

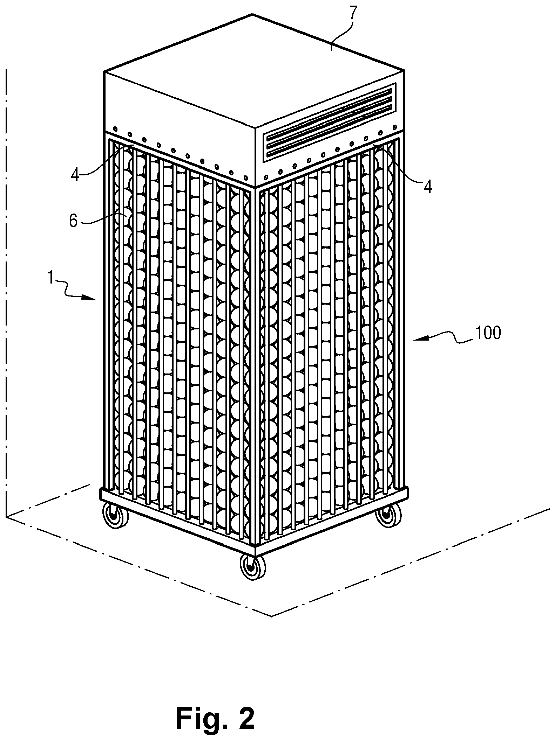

Le fonctionnement de l'unité mobile de refroidissement 100 de l'invention est le suivant. La première étape consiste à refroidir le matériau à changement de phase contenu dans les capsules 6 pour le solidifier. Pour ce faire, et comme cela est illustré à la figure 2, on place l'unité mobile de refroidissement 100 débarrassée de la bâche 9 dans un entrepôt réfrigéré dont la température intérieure suffit à provoquer la solidification du matériau contenu dans les capsules 6 (typiquement une chambre froide maintenue à -20 degrés Celsius d'un entrepôt de stockage). Le matériau contenu dans les capsules 6 est alors entièrement solidifié en quelques heures.

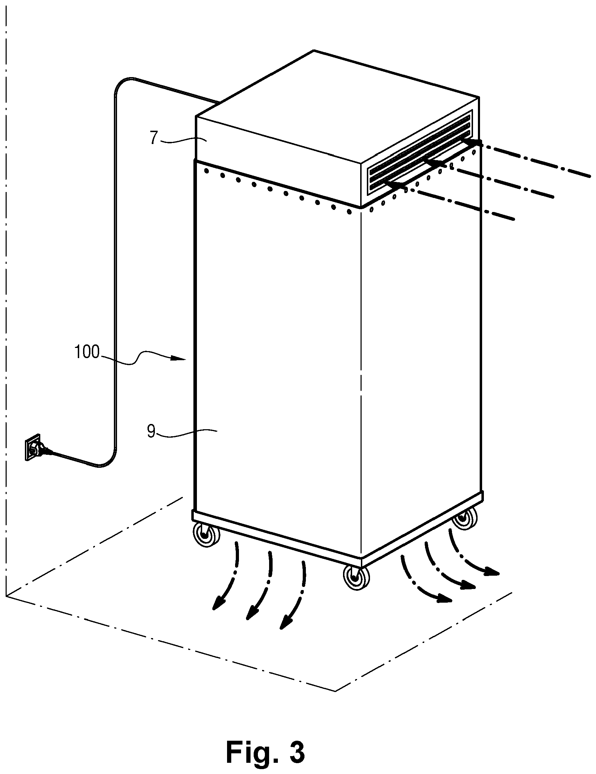

Puis quand les marchandises ou denrées à livrer sont placées dans la soute du camion de livraison, on y place l'unité mobile de refroidissement 100 comportant le chariot 1 préalablement refroidi et recouvert de la bâche occultante 9 comme illustré à la figure 3, et l'on branche le groupe de ventilo-convection 7 à une source d'énergie électrique du camion, par exemple une prise 12 volts de celui-ci. Le groupe de ventilo-convection 7 aspire de l'air par son ouverture 12, ce qui force l'air à pénétrer dans le chariot 1 par le haut à travers la grille 16 et à circuler dans l'espace de stockage 5 du chariot 1 au contact de l'ensemble des capsules 6 en étant canalisé par la bâche 9, avant d'être éjecté dans le camion par le fond 2 comme illustré par les flèches, ce qui génère un flux d'air refroidi adapté à ralentir le réchauffement des marchandises et denrées transportées dans le camion. On pourra bien entendu embarquer plusieurs unités de refroidissement selon l'invention si nécessaire. Puis quand la tournée de livraison est terminée, l'unité mobile de refroidissement est débarrassée de la bâche 9 et est remise à congeler dans l'entrepôt réfrigéré.

Le chariot 1 peut bien entendu être réalisé spécifiquement pour l'application. On peut alternativement utiliser un chariot de manutention du commerce, comme par exemple le chariot « Roll Sécurité » référence 44948103 de la société Caddie, dont les parois et la grille supérieure sont amovibles.

Les capsules 6 sont de préférence du type sphérique. On pourra par exemple utiliser les capsules sphériques « Ice Capsule » de la société Cryogel France d'un diamètre de 137 millimètres renfermant un fluide à changement de phase.

Il a été estimé que la combinaison d'un tel chariot rempli des capsules précitées permet le maintien d'une température de 8 à 10 degrés Celsius dans la soute d'un camion isolé de 4 mètres de long, pendant une durée typique de l'ordre de 6 heures.

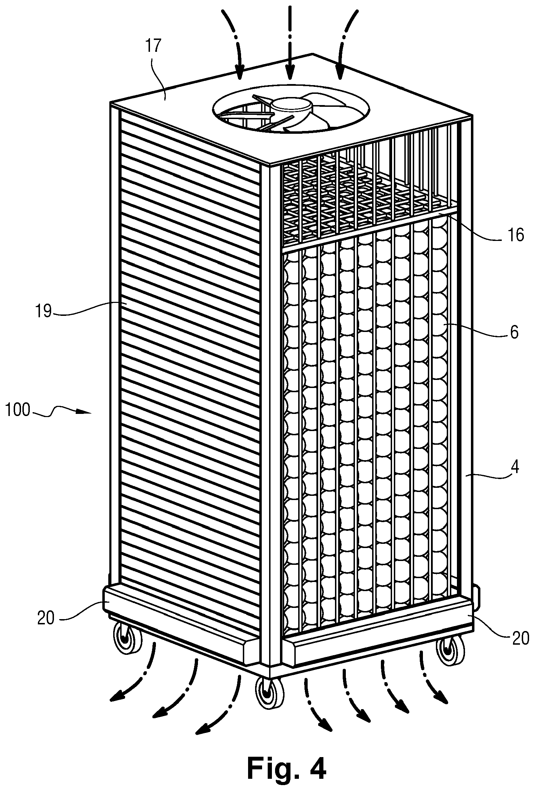

Selon un deuxième mode particulier de réalisation illustré à la figure 4, l'unité mobile de refroidissement comporte toujours un chariot 1 comportant un fond 2 et des parois 3 ajourées. Le groupe de ventilo-convection 17, se réduit ici à une simple plaque percée en son centre pour recevoir une hélice motorisée, et a été placé en extrémité des parois 4. La grille 16 qui délimite la partie supérieure de l'espace de stockage 5 est disposée de façon à laisser un petit espace entre le haut de l'espace de stockage et le groupe de ventilo-convection 7. Ici, l'élément d'occultation comprend des rideaux roulants 19 escamotables dans des cassettes 20 disposées à la base de chaque paroi 4 et pouvant être déployés jusqu'au niveau du groupe de ventilo-convection 17 pour occulter entièrement chacune des parois 4.

L'invention n'est pas limitée à ce qui vient d'être décrit, mais englobe au contraire toute variante entrant dans le cadre défini par les revendications.

En particulier, bien que le chariot soit ici réalisé en fil métallique, d'autres types chariots pourront être utilisés, du moment que leurs parois et leur fond soient ajourés qui délimitent l'espace de stockage soient ajourés.

Bien que l'utilisation de capsules sphériques soit ici préconisée dans le cadre de l'invention, puisque de telles capsules permettent d'organiser un cheminement de l'air aspiré par le groupe de ventilo-convection autour des capsules en maximisant la surface de contact entre l'air et les capsules, d'autres types de capsules pourront être utilisées, à condition de ménager un chemin pour l'air aspiré par le groupe de ventilo-convection.

Bien que l'élément d'occultation ait été décrit comme comprenant une bâche ou des rideaux roulants, on pourra utiliser tout autre élément d'occultation pouvant être escamoté lors de la phase de solidification du matériau à changement de phase, comme des panneaux isolants rapportés de façon amovible sur les parois.

Bien que l'on ait indiqué que le groupe de ventilo-convection soit muni d'une prise pour son alimentation électrique par une source d'énergie externe, le groupe de ventilo-convection pourra être équipé d'une batterie d'accumulateurs pour un fonctionnement autonome.

Bien que l'on ait ici le groupe ventilo-convecteur comme fixé sur le chariot, ce qui implique que le groupe ventilo-convecteur soit refroidi en même temps que le matériau des capsules quand l'unité mobile de refroidissement est placée dans l'entrepôt réfrigéré pour la solidification du matériau à changement de phase, on pourra prévoir que le groupe ventilo-convecteur soit rapporté de façon amovible sur le chariot, de sorte à pouvoir le retirer avant de place l'unité de refroidissement mobile dans l'entrepôt réfrigéré.

De même, bien que l'on ait ici indiqué que l'air est aspiré par le groupe ventilo-convecteur pour le forcer dans l'espace de stockage du chariot afin de le faire circuler entre les capsules, puis être éjecté vers l'extérieur par le fond ajouré du chariot, on pourra bien entendu prévoir le fonctionnement inverse par lequel le groupe ventilo-convecteur aspire de l'air par le fond du chariot en le faisant circuler autour des capsules avant de le rejeter vers l'extérieur.

Enfin, bien que l'on ait indiqué que le groupe de ventilo convection soit placé à une extrémité supérieure du chariot au-dessus de l'espace de stockage, il pourra être placé sous l'espace de stockage.

## Revendications

1. Unité mobile de refroidissement comportant :
- un chariot (1) comportant un fond (2) ajouré et des parois (4) ajourées définissant un espace de stockage (5), le chariot étant muni d'éléments roulants (3) pour son déplacement ;
- des capsules (6) contenant un matériau à changement de phase et reçues dans l'espace de stockage du chariot ;
- un élément d'occultation (9;19) des parois pour sélectivement occulter ou découvrir les parois du chariot ;
- un groupe de ventilo-convection (7;17) rapporté sur le chariot pour aspirer de l'air de l'extérieur, le faire pénétrer par une extrémité dans l'espace de stockage pour le faire circuler autour des capsules avant de le rejeter vers l'extérieur par une autre extrémité de l'espace de stockage.

2. Unité mobile de refroidissement selon la revendication 1, dans laquelle le groupe de ventilo-convection (7;17) est rapporté de façon fixe sur le chariot (1) au-dessus de l'espace de stockage.

3. Unité mobile de refroidissement selon la revendication 1, dans laquelle le chariot (1) est un chariot en fil métallique.

4. Unité mobile de refroidissement selon la revendication 1, dans laquelle les capsules (6) sont sphériques.

5. Unité mobile de refroidissement selon la revendication 1, dans laquelle le matériau à changement de phase est liquide à température ambiante.

6. Unité mobile de refroidissement selon la revendication 1, dans lequel l'élément d'occultation est une bâche (9) étanche à l'air.

7. Unité mobile de refroidissement selon la revendication 1, dans lequel l'élément d'occultation comporte des rideaux roulants (19) adaptés à occulter chacun une paroi et être escamotables dans une cassette (20).

8. Procédé d'utilisation d'une unité mobile de refroidissement selon l'une des revendications précédentes, comportant les étapes de :
- placer au préalable l'unité mobile de refroidissement, dans un endroit réfrigéré pour provoquer un changement de phase du matériau à changement de phase, l'élément d'occultation (9;19) ayant été escamoté ;
- puis placer l'unité de refroidissement mobile dans une zone à refroidir en plaçant l'élément d'occultation en position d'occultation et en activant le groupe de ventilo-convection (7;17).

## Patentansprüche

1. Mobile Kühleinheit, umfassend:
- einen Wagen (1), der einen durchbrochenen Boden (2) und durchbrochene Wände (4) umfasst, die einen Speicherraum (5) definieren, wobei der Wagen mit Rollelementen (3) für seine Verschiebung versehen ist;
- Kapseln (6), die ein Phasenwechselmaterial enthalten und in dem Speicherraum des Wagens aufgenommen sind;
- ein Verdunkelungselement (9; 19) zum Verdunkeln der Wände, um die Wände des Wagens selektiv zu verdunkeln oder zu enthüllen;
- ein Gebläsekonvektionsaggregat (7; 17), das auf dem Wagen befestigt ist, um Luft von außen anzusaugen, sie durch ein Ende in den Speicherraum eindringen zu lassen, um sie um die Kapseln herum zirkulieren zu lassen, ehe sie über ein anderes Ende des Speicherraums nach außen ausgestoßen wird.

2. Mobile Kühleinheit nach Anspruch 1, bei der das Gebläsekonvektionsaggregat (7; 17) an dem Wagen (1) über dem Speicherraum auf feste Weise angebracht ist.

3. Mobile Kühleinheit nach Anspruch 1, bei der der Wagen (1) ein Wagen aus Metalldraht ist.

4. Mobile Kühleinheit nach Anspruch 1, bei der die Kapseln (6) kugelförmig sind.

5. Mobile Kühleinheit nach Anspruch 1, bei der das Phasenwechselmaterial bei Umgebungstemperatur flüssig ist.

6. Mobile Kühleinheit nach Anspruch 1, bei der das Verdunkelungselement eine luftdichte Plane (9) ist.

7. Mobile Kühleinheit nach Anspruch 1, bei der das Verdunkelungselement Rollläden (19) umfasst, die geeignet sind, jeweils eine Wand zu verdunkeln, und die in eine Kassette (20) einziehbar sind.

8. Verfahren zur Verwendung einer mobilen Kühleinheit nach einem der vorhergehenden Ansprüche, umfassend die Schritte:
- vorheriges Platzieren der mobilen Kühleinheit an einem gekühlten Ort, um einen Wechsel des Phasenwechselmaterials zu bewirken, wobei das Verdunkelungselement (9; 19) eingezogen worden ist;
- dann Platzieren der mobilen Kühleinheit in einer zu kühlenden Zone, indem man das Verdunkelungselement in der Verdunkelungsposition platziert und das Gebläsekonvektionsaggregat (7; 17) aktiviert.

## Claims

1. A mobile cooling unit comprising:
· a cart (1) having a bottom (2) and walls (4) with openings defining a storage space (5), the cart being provided with wheel elements (3) to enable it to be moved;
· capsules (6) containing a phase-change material and received in the storage space of the cart;
· a closure element (9; 19) for covering the walls to close or to uncover the walls of the cart selectively; and
· a fan unit (7; 17) attached to the cart in order to suck in air from the outside, and to cause the air to penetrate through an end into the storage space in order to cause it to flow around the capsules prior to being discharged to the outside through another end of the storage space.

2. A mobile cooling unit according to claim 1, wherein the fan unit (7; 17) is permanently attached to the cart (1) above the storage space.

3. A mobile cooling unit according to claim 1, wherein the cart (1) is a cart made of wire.

4. A mobile cooling unit according to claim 1, wherein the capsules (6) are spherical.

5. A mobile cooling unit according to claim 1, wherein the phase-change material is liquid at ambient temperature.

6. A mobile cooling unit according to claim 1, wherein the closure element is an airtight cover (9).

7. A mobile cooling unit according to claim 1, wherein the closure element comprises roller blinds (19), each adapted to cover a respective wall and to be retractable into a respective cassette (20).

8. A method of using a mobile cooling unit according to any preceding claim, the method comprising the steps of:
· initially placing the mobile cooling unit in a refrigerated location in order to cause the phase-change material to change phase, the closure element (9; 19) being removed; and
· then placing the mobile cooling unit in a zone for cooling with the closure element placed in its closing position and while activating the fan unit (7; 17).
